# EUROPEAN PATENT APPLICATION

(11) **EP 4 691 606 A1**
(43) Date of publication of application: **11.02.2026**
(21) Application number: 23930625.1
(22) Date of filing: 31.03.2023
(51) Int. Cl.: B01D 53/94, F01N 3/24

(54) **EXHAUST PURIFICATION DEVICE**

(71) Applicant: Tokyo Roki Co., Ltd., Yokohama-shi Kanagawa 224-0041 (JP)
(72) Inventor: NOHARA, Takuya, Yokohama-shi, Kanagawa 224-0041 (JP)
(74) Representative: Osha BWB
(86) International application number: PCT/JP2023/013512
(87) International publication number: WO 2024/201990

(57) **Abstract**

An exhaust purification device includes a filter configured to collect particulate matter in exhaust gas discharged from an internal combustion engine; a contact device configured to bring the exhaust gas discharged from the filter into contact with a reducing agent; and a catalyst extending in an axial direction and arranged in parallel with the filter, the catalyst being configured to promote a reaction between the reducing agent and nitrogen oxides in the exhaust gas discharged from the contact device, the contact device being located in the axial direction with respect to the catalyst.

## Description

### FIELD

The present invention relates to an exhaust purification device.

### BACKGROUND

A Selective Catalytic Reduction (SCR) system is known as a conventional technology (PTL 1), in which an aqueous urea solution is injected into an exhaust gas path and thermally decomposed to generate ammonia, and the generated ammonia is mixed with exhaust gas to reduce nitrogen oxides.

### [Citation List]

### [PATENT LITERATURE]

[PTL 1] WO2022/097198

### SUMMARY

### [Technical Problem]

In a device described in PTL 1, an injector for injecting the aqueous urea solution needs to be located in the axial direction of a filter, which results in an increase in the dimension of the device.

### [SOLUTION TO PROBLEM]

In one aspect, the present invention provides an exhaust purification device including: a filter configured to collect particulate matter in exhaust gas discharged from an internal combustion engine; a contact device configured to bring the exhaust gas discharged from the filter into contact with a reducing agent; and a catalyst extending in an axial direction and arranged in parallel with the filter, the catalyst being configured to promote a reaction between the reducing agent and nitrogen oxides in the exhaust gas discharged from the contact device, the contact device being located in the axial direction with respect to the catalyst.

### [ADVANTAGEOUS EFFECT OF THE INVENTION]

According to the present invention, a compact exhaust purification device can be provided.

### BRIEF DESCRIPTION OF DRAWINGS

FIG. 1 is a top view of a purification device according to an embodiment.
FIG. 2 is a top view of the purification device according to the embodiment, illustrating a state in which a guide pipe is removed from a DPF device and a contact device.
FIG. 3 is a perspective view of the purification device according to the embodiment, with a part of the guide pipe omitted.
FIG. 4A is a top view of the contact device, FIG. 4B is a perspective view of the contact device with a part of a partition wall omitted, FIG. 4C is a view in the direction of an arrow IVC in FIG. 4A, and FIG. 4D is a cross-sectional view taken along a line IVD-IVD in FIG. 4C.
FIG. 5A is a side view of the purification device according to the embodiment, FIG. 5B is a cross-sectional view taken along a line VB-VB in FIG. 5A, and FIG. 5C is a cross-sectional view taken along a line VC-VC in FIG. 5B.
FIG. 6 is a perspective view of the purification device according to the embodiment, with a part of the purification device omitted.
FIG. 7A is a cross-sectional view of the purification device, and FIG. 7B is a view illustrating a flow of exhaust gas indicated by arrows in the cross-sectional view of FIG. 7A.
FIG. 8 is an explanatory diagram of a comparative example relative to the embodiment.
FIGS. 9A to 9D each illustrate a purification device according to modifications.
FIG. 10 illustrates the purification device according to another modification.
FIGS. 11A and 11B each illustrate a comparison between the purification device according to the embodiment and a conventional purification device, FIG. 11A illustrates a state in which the guide pipe is removed from the DPF device and the contact device, and FIG. 11B illustrates a length of the purification device in an X-axis direction.

### DESCRIPTION OF EMBODIMENTS

### First Embodiment

A purification device 1 corresponding to an exhaust purification device according to a first embodiment, will be described below with reference to the drawings. The purification device 1 is a Selective Catalytic Reduction (SCR) device configured to inject an aqueous urea solution into exhaust gas to reduce nitrogen oxides in the exhaust gas using ammonia as a reducing agent.

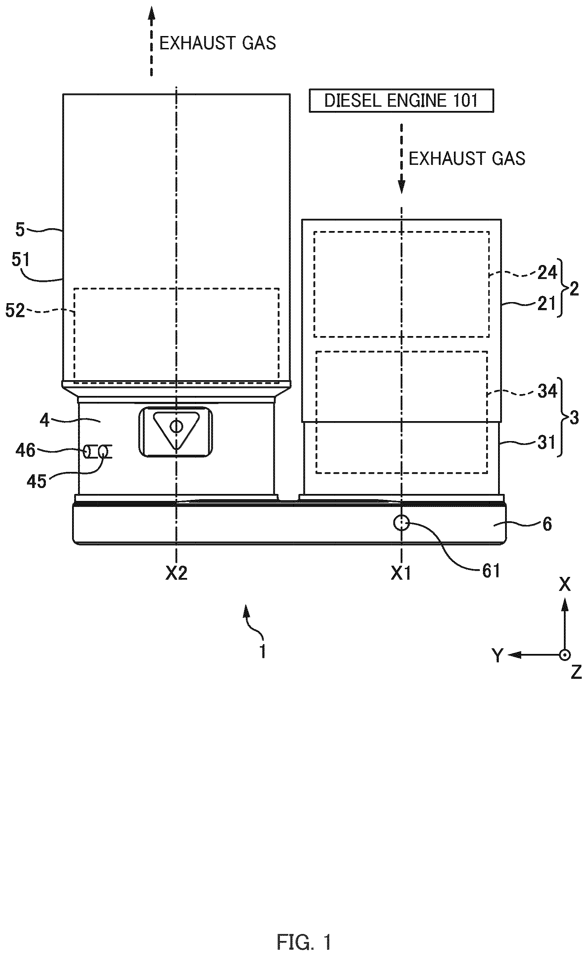

The purification device 1 is mounted on a vehicle equipped with a diesel engine 101, and purifies the exhaust gas from the diesel engine 101. In the following description, X, Y, and Z axes of the purification device 1 are defined as illustrated in FIG. 1.

The purification device 1 mainly includes: a DOC device 2, a DPF device 3, a contact device 4, an SCR catalyst device 5 including an SCR catalyst 52, a guide pipe 6, and an adjuster 7. As illustrated in FIG. 1, the DOC device 2 and the DPF device 3 are arranged in alignment in the X-axis direction. These devices are connected via pipes or housings, and their internal spaces are connected to each other (hereinafter also referred to as "communication"). The exhaust gas from the diesel engine 101 passes through the DOC device 2, the DPF device 3, the guide pipe 6, the contact device 4, and the SCR catalyst device 5, in this order.

The DOC device 2 includes a case 21 and an oxidation catalyst 24 (DOC: Diesel Oxidation Catalyst). The case 21 has a substantially cylindrical shape and has a central axis X1 substantially parallel to the X-axis. The oxidation catalyst 24 has a substantially columnar shape and is housed in the case 21.

As illustrated in FIG. 1, the DPF device 3 includes a case 31 and a Diesel Particulate Filter (DPF) 34.

The case 31 is a housing configured to house the DPF 34, and is a substantially cylindrical member coaxial with the central axis X1. The DPF device 3 and the DOC device 2 are connected by joining the case 21 to the case 31.

The DPF 34 is a filter for collecting and removing particulate matter component in the exhaust gas, and has a columnar shape with the central axis X1. That is, the DPF 34 is disposed coaxially with the case 31. The DPF 34 is removably housed inside the case 31.

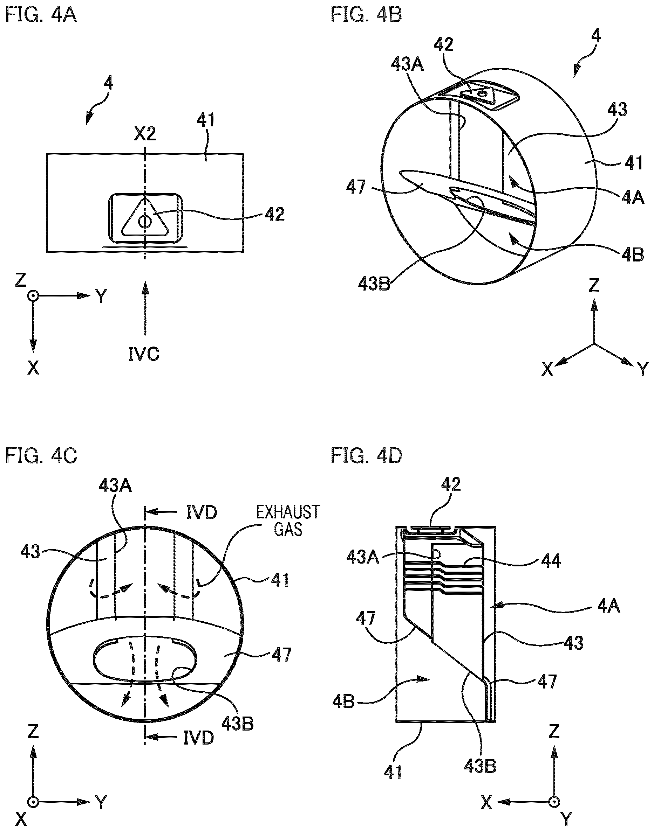

The contact device 4 has a function to bring the exhaust gas discharged from the guide pipe 6 into contact with the aqueous urea solution as a reducing agent, and then to guide the exhaust gas toward the SCR catalyst device 5. As illustrated in FIG. 4, the contact device 4 includes an injector 42, an overflow pipe 43, a plurality of baffle plates 44, an NOx sensor 45, a temperature sensor 46, and a partition wall 47.

The case 41 is a housing that forms an outer shell of the contact device 4, and has a function to guide the exhaust gas discharged from the DPF device 3. The case 41 is formed in a cylindrical-hollow shape with a central axis X2.

As illustrated in FIG. 4, the partition wall 47 is a plate-like member that partitions a space around the contact device 4. The partition wall 47 has a bent shape as viewed in the Y-axis direction. The partition wall 47 is connected to an outer peripheral portion of the overflow pipe 43 without gaps, and also connected to an inner peripheral surface of the case 41 without gaps. The partition wall 47 divides the space inside the contact device 4 into a first space 4A and a second space 4B. FIG. 4B illustrates the inside of the first space 4A, with a part of the partition wall 47 omitted. The first space 4A is a space into which the exhaust gas discharged from the guide pipe 6 is guided, and the second space 4B is a space into which the exhaust gas discharged from the overflow pipe 43 is guided.

The injector 42 has the function of injection of the aqueous urea solution. The injector 42 is provided so as to penetrate the inside and outside of the case 41, and is located away from the overflow pipe 43 and the baffle plate 44 in the Z-axis direction. The injector 42 injects the aqueous urea solution in the Z-axis direction, thereby bringing the aqueous urea solution into contact with the exhaust gas in the first space 4A.

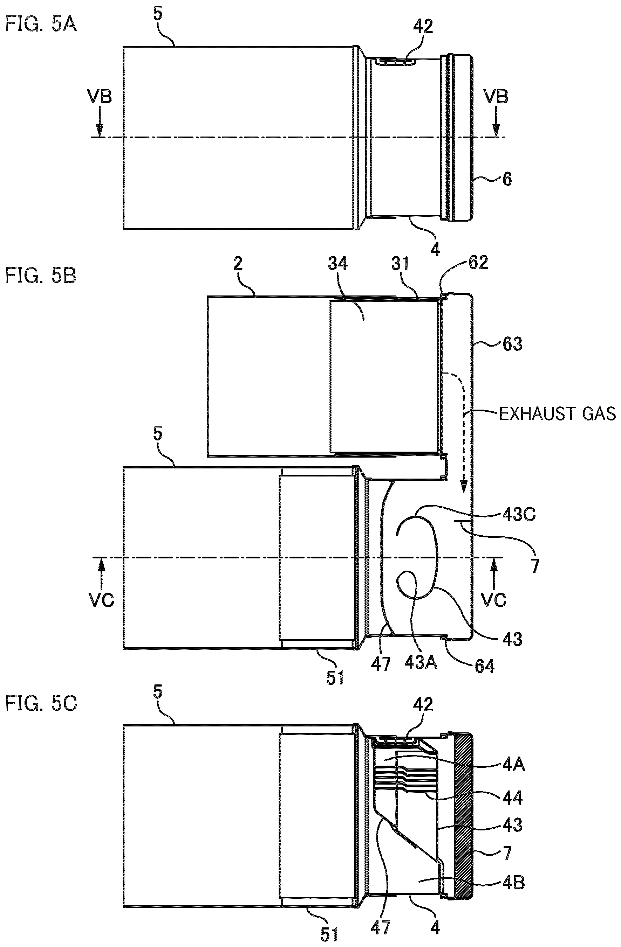

The overflow pipe 43 is a tubular member extending in the Z-axis direction, and has a substantially elliptical cross-section that is symmetrical about the central axis X2. As illustrated in FIGS. 4 and 5, the elliptical shape of the overflow pipe 43 is flattened in the X-axis direction.

The overflow pipe 43 is provided to extend in the Z-axis direction from the vicinity of the inner peripheral surface of the case 41, and guides the exhaust gas to the SCR catalyst device 5. The shape of the overflow pipe 43 is not limited to the elliptical shape as in the present embodiment, but may generally have an oval cross-section. Here, the "oval shape" encompasses the shape such as elliptical, oblong, racetrack-shaped, and egg-shaped forms.

An opening 43A is formed at one end portion of the overflow pipe 43 located near the injector 42. The inside of the overflow pipe 43 and the first space 4A are in communication with each other through the opening 43A. The opening 43A is formed in a rectangular shape extending in the Z-axis direction (FIG. 4C).

The other end portion of the overflow pipe 43 is held by the partition wall 47. The other end portion of the overflow pipe 43 is cut so as to intersect obliquely with the Z-axis as viewed in the Y-axis direction, which forms the opening 43B (FIGS. 4B-4D). The inside of the overflow pipe 43 and the second space 4B are in communication with each other through the opening 43B. The other end portion of the overflow pipe 43 is not limited to being formed obliquely with the Z-axis as in the present embodiment, but may alternatively be formed to be perpendicular to the Z-axis.

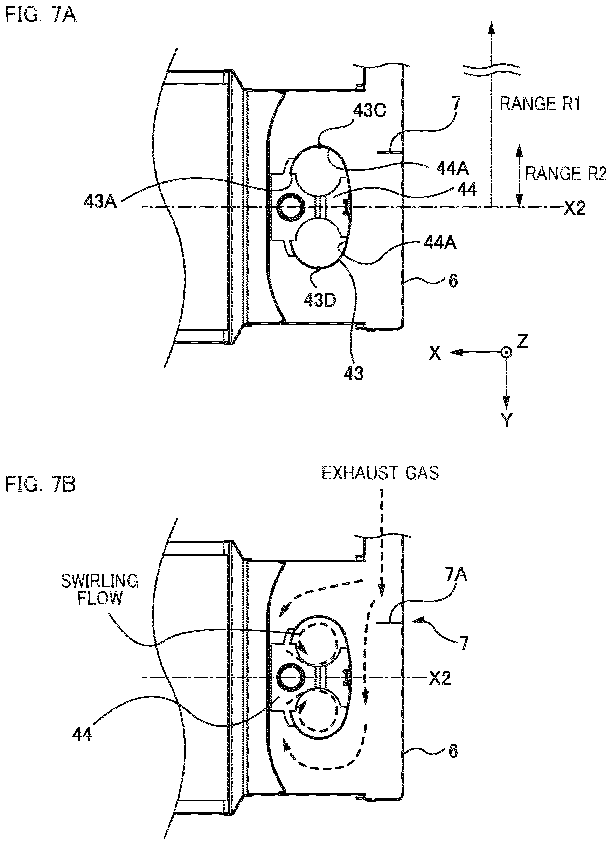

As illustrated in FIG. 7A, the overflow pipe 43 has: an end portion 43C on the upstream side of the exhaust gas flow in the Y-axis direction; and an end portion 43D on the downstream side of the exhaust gas flow in the Y-axis direction.

The baffle plates 44 are each a plate-like member extending in the Y-axis and X-axis directions, and are fixed to the upper portion of the case 41 (FIGS. 5C and 7). The baffle plates 44 are arranged side-by-side in the Z-axis direction. Each of the baffle plates 44 is located so as to extend from the inside to the outside of the overflow pipe 43 through the opening 43A. Openings 44A each having a substantially circular shape are formed between a portion of each baffle plate 44 located inside the overflow pipe 43 and the inner surface of the overflow pipe 43. The openings 44A are respectively formed on two sides: the end portion 43C side; and the end portion 43D side.

The NOx sensor 45 and the temperature sensor 46 are provided in a side-surface portion of the case 41, as illustrated in FIG. 1. The NOx sensor 45 measures the amount of nitrogen oxides (NOx) in the exhaust gas inside the case 41, and the temperature sensor 46 measures the temperature of the exhaust gas inside the case 41. The NOx sensor 45 and the temperature sensor 46 are each electrically connected to an external control device (not illustrated) via a cable, and can transmit measured values as electrical signals.

As illustrated in FIG. 1, the SCR catalyst device 5 includes a case 51 and the SCR catalyst 52 (SCR: Selective Catalytic Reduction). The case 51 has a substantially cylindrical shape and has an axis coaxial with a central axis X2. The SCR catalyst 52 is housed in the case 51.

The SCR catalyst 52 is a substantially columnar member having an axis coaxial with the central axis X2, and is arranged substantially parallel to the DPF 34 with a distance therefrom in the Y-axis direction. That is, the DPF 34 and the SCR catalyst 52 are arranged in parallel. The inside of the case 51 is in connection with the second space 4B. The SCR catalyst device 5 has a function of, in response to the supply of the exhaust gas from the second space 4B, promoting the nitrogen oxide reduction reaction by ammonia using the SCR catalyst 52.

As illustrated in FIGS. 1 to 6, the guide pipe 6 is a tubular member extending in the Y-axis direction, and an exhaust gas guide path is formed inside the guide pipe 6. The guide pipe 6 is in internal communication with each of the DPF device 3 and the SCR catalyst device 5. Specifically, the guide pipe 6 includes: a connection portion 62 detachably attached to the DPF device 3; and a connection portion 64 detachably attached to the SCR catalyst device 5 (FIG. 1). The connection portion 62 is formed in a substantially cylindrical shape extending in the X-axis direction and can be connected to the case 31 without any gaps. The connection portion 64 is formed in a substantially cylindrical shape extending in the X-axis direction and can be connected to the SCR catalyst device 5 without any gaps. An intermediate portion 63 is formed between the connection portion 62 and 64. The intermediate portion 63 extends in the Y-axis direction and has a substantially rectangular hollow cross section.

The guide pipe 6 allows the exhaust gas to pass through the hollow inside of the guide pipe 6, which can guide the exhaust gas from the DPF device 3 to the contact device 4. The guide pipe 6 is bent in a U-shape as viewed in the Z-axis direction. As indicated by a dotted arrow in FIG. 5B, the guide pipe 6 guides the exhaust gas through the connection portion 62, the intermediate portion 63, and the connection portion 64 in this order. As described above, the guide pipe 6 can change the flow direction of the exhaust gas discharged from the DPF 34 by 180 degrees and guide the exhaust gas to the contact device 4.

A pressure sensor 61 is provided in a side-surface portion of the guide pipe 6. The pressure sensor 61 measures the pressure of the exhaust gas inside the guide pipe 6. The pressure sensor 61 is electrically connected to an external control device (not illustrated) via a cable or the like, and can transmit the measured pressure as an electrical signal.

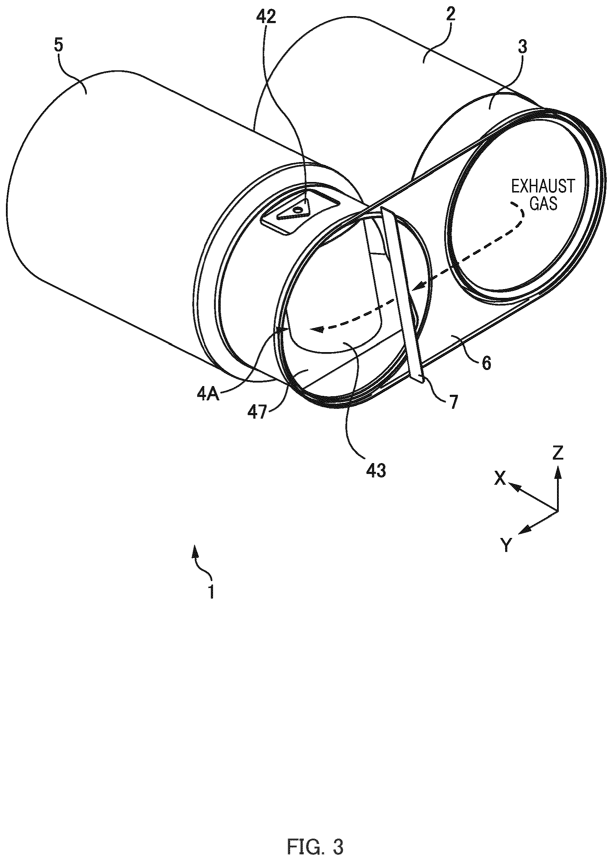

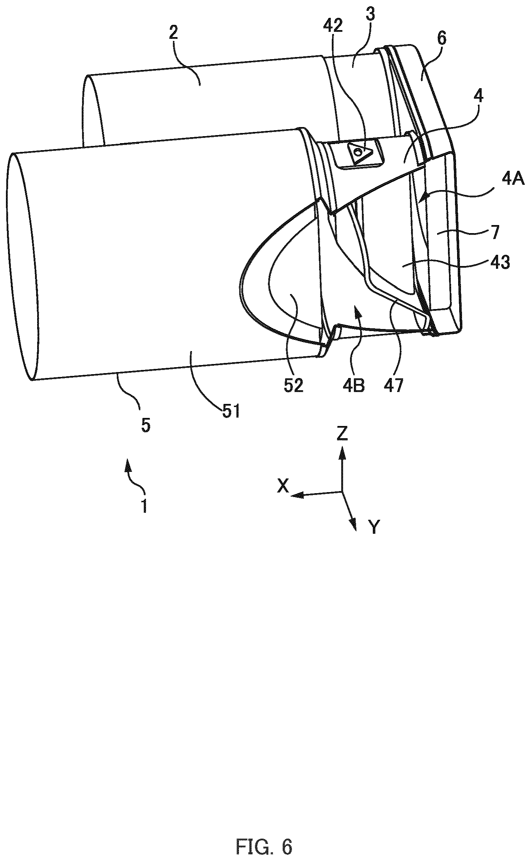

The adjuster 7 is provided inside the guide pipe 6 as illustrated in FIGS. 3, 6, and the like. The adjuster 7 is a flat plate-shaped member extending in the Z-axis and X-axis directions. The adjuster 7 has an opposing surface 7A facing the flow of the exhaust gas. The opposing surface 7A has the function of changing the flow of the exhaust gas by being hit by the exhaust gas flowing inside the guide pipe 6. By the change in the flow of the exhaust gas, the flow of the exhaust gas around the overflow pipe 43 is adjusted to be symmetrical. The details thereof will be described later.

Considering the state of the exhaust gas flowing inside the overflow pipe 43, it is preferable that the adjuster 7 is located on the upstream side relative to the central axis X2 (indicated as a range R1 in FIG. 7) with reference to the flow of the exhaust gas. It is more desirable that the adjuster 7 is located between the end portion 43C and the central axis X2 (indicated as a range R2 in FIG. 7) with reference to the flow of the exhaust gas or in the Y-axis direction.

In the present embodiment, the adjuster 7 is in contact with the inner surface of the guide pipe 6, but may be provided so as to form a gap between the adjuster 7 itself and the inner surface of the guide pipe 6.

### Exhaust Gas Purification

The purification of exhaust gas in the purification device will be described below. The DOC device 2 oxidizes nitrogen oxides in the exhaust gas. Thereafter, the exhaust gas passes through the DPF device 3. At this time, the DPF 34 collects and removes particulate matter component in the exhaust gas. The exhaust gas is discharged from the DPF 34 and enters the guide pipe 6.

The exhaust gas having entered the guide pipe 6 is guided along the shape of the guide pipe 6, turns 180 degrees as indicated by the dotted line in each figure, and is then discharged to the contact device 4. While the exhaust gas flows inside the guide pipe 6, the exhaust gas hits the opposing surface 7A of the adjuster 7 and changes the flow direction. The adjuster 7 changes the flow direction of the exhaust gas, thereby adjusting the flow of the exhaust gas around the overflow pipe 43 so as to be substantially equal on the end portion 43D side and the end portion 43C side, as illustrated in FIG. 7B.

The exhaust gas having entered the inside of the contact device 4 passes through the first space 4A, the overflow pipe 43, and the second space 4B in this order. Inside the first space 4A, the exhaust gas flows around the outside of the overflow pipe 43 and enters the inside of the overflow pipe 43 through the opening 43A. At this time, the exhaust gas flows along the outer periphery of the overflow pipe 43, thereby generating two symmetrical swirling flows (hereinafter, referred to as "swirling flows"). Then, the exhaust gas flows inside the overflow pipe 43 toward the second space 4B while maintaining the swirling flows (FIG. 7B). The baffle plates 44 and the overflow pipe 43 are heated on the inside and outside of the pipe by the flowing exhaust gas.

At the same time, in the first space 4A, the aqueous urea solution is injected from the injector 42. The injected aqueous urea solution hits the baffle plate 44 and enters the inside of the overflow pipe 43 through the opening 43A, together with the exhaust gas. By means of the swirling flows of the exhaust gas, ammonia is mixed and agitated with the exhaust gas. The urea contained in the aqueous urea solution is heated by the baffle plate 44 or the overflow pipe 43, thereby generating ammonia.

Since the flow of the exhaust gas becomes symmetrical around the overflow pipe 43, the flow velocity of the exhaust gas is less likely to decrease, and the swirling flows can be generated symmetrically and efficiently. This facilitates mixing and agitation of ammonia and aqueous urea solution with the exhaust gas.

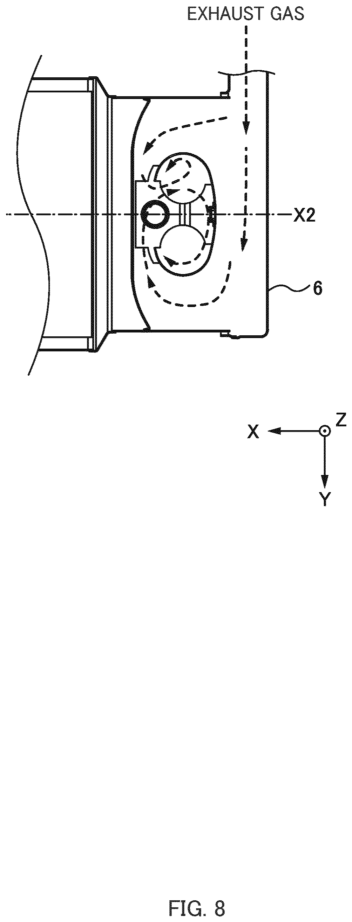

For comparison, FIG. 8 illustrates the flow of the exhaust gas without the adjuster 7. In the case where the adjuster 7 is absent, the flow velocity and flow rate of the exhaust gas around the overflow pipe 43 are biased so as to increase on the end portion 43D side, and the swirling flows become asymmetrical. As a result, the mixing and agitation of the exhaust gas with the aqueous urea solution, as well as heating of the urea, become non-uniform. In addition, the resistance to the exhaust gases increases.

In contrast, in the present embodiment, the flow rate and flow velocity of the exhaust gas symmetrical with respect to the central axis X2 are formed around the overflow pipe 43 as viewed in the Z-axis direction. Since the exhaust gas flows symmetrically around the overflow pipe 43 and the flow velocity of the exhaust gas increases, the overflow pipe 43 is easily heated. This facilitates generation of ammonia by heating of the aqueous urea solution. The aqueous urea solution adhered to the inside of the overflow pipe 43 is efficiently heated, thereby enabling easy generation of ammonia. The possibility of the aqueous urea solution remaining inside the overflow pipe 43 without generating ammonia, thereby forming urea crystals and causing adhesion, is reduced.

The exhaust gas flowing through the overflow pipe 43 passes through the opening 43B and the second space 4B to reach the SCR catalyst device 5. In the SCR catalyst device 5, the SCR catalyst 52 promotes the reduction of nitrogen oxides in the exhaust gas by ammonia. As a result, nitrogen oxides in the exhaust gas are reduced to nitrogen.

### Filter Replacement

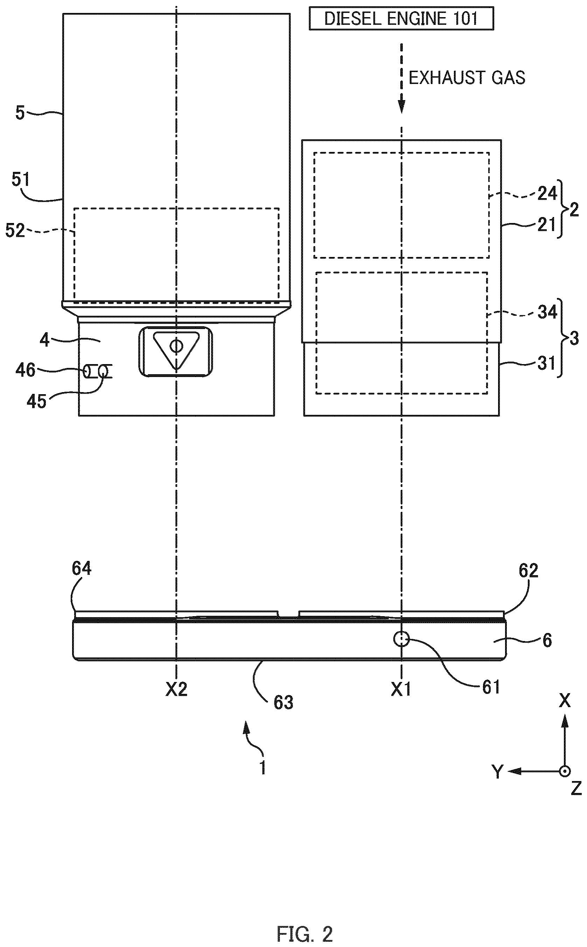

When the DPF 34 is replaced with a new one or cleaned, the cable is first disconnected from the pressure sensor 61. Subsequently, as illustrated in FIG. 2, the guide pipe 6 is removed from the DPF device 3 and the SCR catalyst device 5. After the guide pipe 6 is removed, the DPF 34 in the DPF device 3 is replaced with a new one.

After the DPF 34 is replaced, the guide pipe 6 is mounted and the cable is attached to the pressure sensor 61, thereby completing the operation.

### Modifications

### Modifications of Adjuster

The shape and dimension of the adjuster 7 are not limited to those described above and may be configured in various manners. For example, the adjuster 7 may be a columnar or tube-shaped member extending in the Z-axis direction or in a direction intersecting the Z-axis. The cross-sectional shape of the adjuster 7 is not limited to a rectangular shape, but may be any cross-sectional shape such as a triangular or a circular cross-sectional shape, depending on conditions. The number of members may be set appropriately depending on conditions such as the shape and arrangement of the overflow pipe 43.

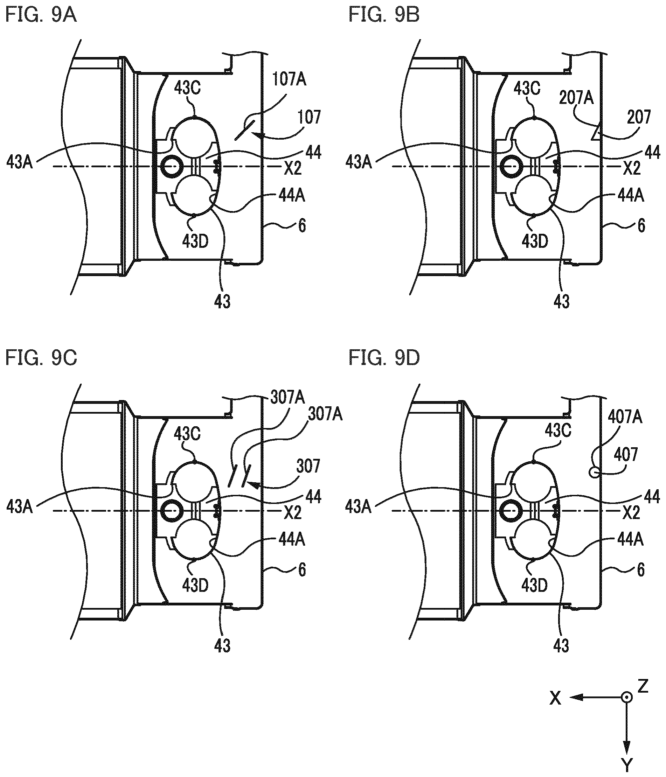

FIG. 9 illustrates such modifications of the adjuster 7, as adjusters 107, 207, 307 and 407. The adjusters 107, 207, 307 and 407 have opposing surfaces 107A, 207A, 307A, and 407A, respectively, and the flow of the exhaust gas can be changed and adjusted by the exhaust gas hitting the opposing surfaces 107A, 207A, 307A, 407A.

As illustrated in FIG. 9A, the adjuster 107 is disposed at a distance from the side wall of the guide pipe 6 in the X-axis direction. The adjuster 207 has a triangular cross section. The opposing surfaces 107A and 207A extend so as to intersect obliquely with respect to the Y-axis direction (FIG. 9B).

A plurality of adjusters 307 are provided inside the guide pipe 6 (FIG. 9C). The adjuster 407 has a circular cross section (FIG. 9D). The adjuster 407 may be a columnar member extending in the Z-axis direction, or a tube-shaped member, and may have an oval cross section instead of the circular cross section.

### Modification of Overflow Pipe

The overflow pipe 43 need not extend parallel to the Z-axis direction, nor extend perpendicular to the Y-axis direction. In other words, the direction in which the overflow pipe 43 extends may be a direction that intersects with the Z-axis. The direction in which the overflow pipe 43 extends need not be perpendicular to the Y-axis, but may be a direction that intersects obliquely with respect to the Y-axis.

### Modification of Guide Pipe

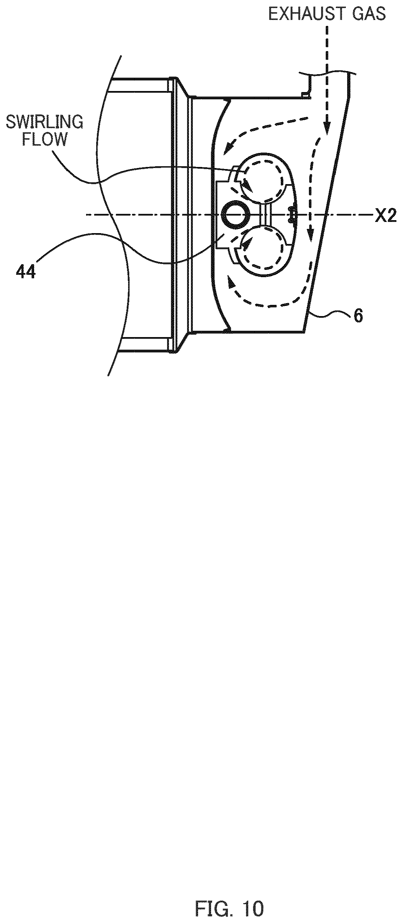

A configuration in which the purification device 1 does not include the adjuster 7 may also be adopted. As an example, as illustrated in FIG. 10, it is acceptable that, without the adjuster 7, the flow path of the exhaust gas formed by the guide pipe 6 and the overflow pipe 43 is narrowed on the downstream side to adjust the flow of the exhaust gas.

### Effects

### Aspect 1

In the above-described embodiment and modifications, the purification device 1 includes: the DPF 34 configured to collect particulate matter in exhaust gas discharged from an internal combustion engine; the contact device 4 configured to bring the exhaust gas discharged from the DPF 34 into contact with a reducing agent; and the SCR catalyst 52 extending in the direction of the central axis X2 and arranged in parallel with the DPF 34, the SCR catalyst 52 being configured to promote a reaction between the reducing agent and nitrogen oxides in the exhaust gas discharged from the contact device 4, the contact device 4 being located in the direction of the central axis X2 with respect to the SCR catalyst 52.

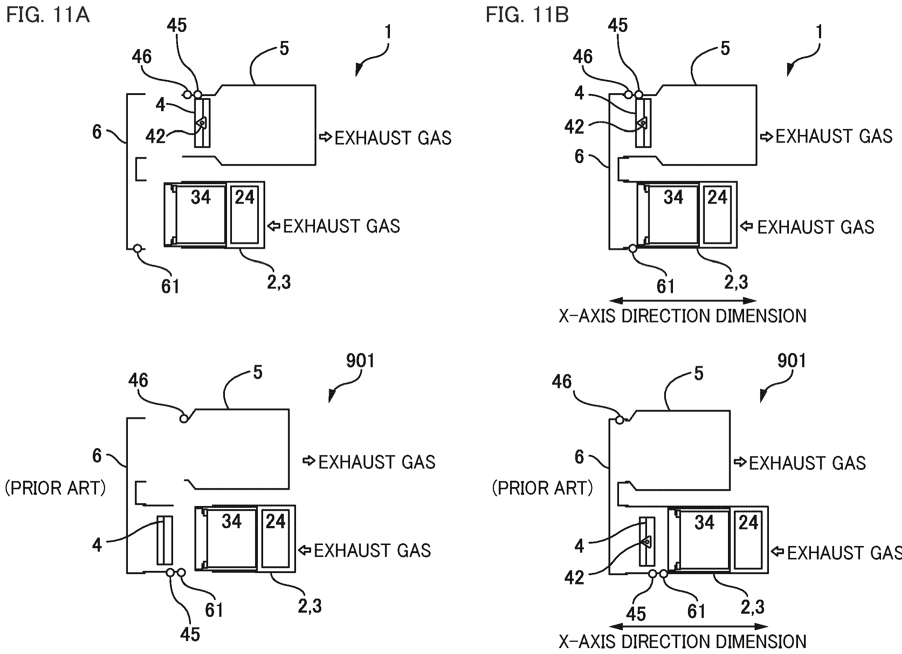

With the above-described configuration, the compact purification device 1 can be achieved. In addition, the replacement of the DPF 34 is easily performed. For comparison, FIG. 11 illustrates a purification device 901 according to the prior art.

As illustrated in FIG. 11A, in the purification device 901, the contact device 4 is located on the central axis X1 of the DPF 34. In this case, the contact device 4 needs to be removed from the case 31 when replacing the DPF 34. At this time, it is necessary not only to remove the pressure sensor 61 but also to remove the injector 42 from the case 41, and to disconnect the cable from the NOx sensor 45. Thus, the operation is labor-intensive.

As illustrated in FIG. 11B, in the purification device 901, since the contact device 4, the DPF device 3, and the DOC device 2 are arranged in series in the X-axis direction, the device dimensions in the X-axis direction become long.

In contrast, in the purification device 1 according to the present embodiment and the modifications, the contact device 4 is not arranged in series with the DPF device 3 and the DOC device 2. Therefore, the dimension of the purification device 1 in the X-axis direction can be shortened. The DPF 34 can be replaced while the contact device 4 remains attached to the SCR device 5, thus making the replacement work easier. In the conventional configuration, a joint portion to be separated during replacement or cleaning of the DPF 34 is provided on the downstream side of the exhaust gas with respect to the contact device 4. When such a joint portion is separated, there is a possibility of operational problems such as leakage or seeping of the aqueous urea solution. In contrast, in the purification device 1, the joint portion to be separated during replacement or cleaning of the DPF 34 is provided on the upstream side of the exhaust gas with respect to the contact device 4. Thus, leakage of the aqueous urea solution does not occur.

### Aspect 2

In Aspect 1, the purification device 1 further includes the guide pipe 6 configured to guide the exhaust gas discharged from the filter to the filter.

With the above-described configuration, the purification device 1 includes the guide pipe 6, which allows the exhaust gas to be easily guided between the contact device 4 and the DPF 34 which are arranged in parallel.

### Aspect 3

In Aspects 1 and 2, the guide pipe 6 is bent in a U-shape.

With the above-described configuration, the purification device 1 includes the bent guide pipe 6, which allows the exhaust gas to be easily guided between the contact device 4 and the DPF 34 which are arranged in parallel.

### Aspect 4

In any one of Aspects 1 to 3, the purification device 1 further includes the case 31 (corresponding to a filter housing portion) configured to house the DPF 34. The guide pipe 6 is configured to be detachably attached to the contact device 4 and the case 31.

With the above-described configuration, the guide pipe 6 is detachably attached to the contact device 4 and the case 31, thereby easily performing replacement of the DPF 31.

### Aspect 5

In any one of Aspects 1 to 4, the purification device 1 further includes the NOx sensor 45 disposed near the contact device 4, the NOx sensor 45 being configured to measure nitrogen oxides in the exhaust gas.

With the above-described configuration, the NOx sensor 45 is located near the contact device 4. Thus, it is unnecessary to disconnect the cable connected to the NOx sensor 45 from the contact device 4 and/or to remove the injector 42 from the case 41 when removing the guide pipe 6 (FIG. 11A). Therefore, the replacement work of the DPF 31 is simplified.

### Aspect 6

In any one of Aspects 1 to 5, the purification device 1 further includes the temperature sensor 46 disposed near the contact device 4, the temperature sensor 46 being configured to measure a temperature of the exhaust gas.

With the above-described configuration, the temperature sensor 46 is located near the contact device 4. Thus, it is unnecessary to disconnect the temperature sensor 46 or the cable connected to it from the contact device 4 when removing the guide pipe 6. Therefore, the replacement work of the DPF 31 is simplified.

### REFERENCE SIGNS LIST

- 1: purification device
- 2: DOC device
- 3: DPF device
- 4: contact device
- 5: SCR catalyst device

## Claims

1. An exhaust purification device comprising:
a filter configured to collect particulate matter in exhaust gas discharged from an internal combustion engine;
a contact device configured to bring the exhaust gas discharged from the filter into contact with a reducing agent; and
a catalyst extending in an axial direction and arranged in parallel with the filter, the catalyst being configured to promote a reaction between the reducing agent and nitrogen oxides in the exhaust gas discharged from the contact device,
the contact device being located in the axial direction with respect to the catalyst.

2. The exhaust purification device according to claim 1 further comprising
a guide pipe configured to guide the exhaust gas discharged from the filter to the contact device.

3. The exhaust purification device according to claim 2, wherein
the guide pipe is bent in a U-shape.

4. The exhaust purification device according to claim 2, further comprising
a filter housing portion configured to house the filter, wherein
the guide pipe is configured to be detachably attached to the contact device and the filter housing portion.

5. The exhaust purification device according to claim 1, further comprising
a nitrogen oxide sensor disposed near the contact device, the nitrogen oxide sensor being configured to measure nitrogen oxides in exhaust gas.

6. The exhaust purification device according to claim 1, further comprising
a temperature sensor disposed near the contact device, the temperature sensor being configured to measure a temperature of exhaust gas.
